# EUROPÄISCHE PATENTSCHRIFT

(11) **EP 2 144 728 B1**
(45) Veröffentlichungstag und Bekanntmachung des Hinweises auf die Patenterteilung: **04.01.2017**
(21) Anmeldenummer: 08735149.0
(22) Anmeldetag: 10.04.2008
(51) Int. Cl.: C03C 21/00

(54) **VERFAHREN ZUM EINBRINGEN EINER STRUKTUR IN EINE OBERFLÄCHE EINES TRANSPARENTEN WERKSTÜCKS**
METHOD FOR INCORPORATING A STRUCTURE INTO A SURFACE OF A TRANSPARENT WORKPIECE
PROCÉDÉ POUR METTRE EN PLACE UNE STRUCTURE DANS UNE SURFACE D'UNE PIÈCE À USINER TRANSPARENTE

(30) Priorität: 17.04.2007 DE 102007018402
(43) Veröffentlichungstag der Anmeldung: 20.01.2010
(73) Patentinhaber: Panasonic Electric Works Europe AG, 85521 Ottobrunn (DE)
(72) Erfinder: STAHR, Christoph, 83043 Bad Aibling (DE)
(74) Vertreter: Beckord, Klaus
(86) Internationale Anmeldenummer: PCT/EP2008/002840
(87) Internationale Veröffentlichungsnummer: WO 2008/125273

(56) Entgegenhaltungen:
- EP-A- 0 761 337
- WO-A-03/022506
- DE-A1- 19 517 625
- DE-A1-102006 029 941
- DE-A1-102007 018 402
- DE-C1- 19 637 255
- US-A- 5 761 111
- US-A- 5 987 920
- US-A1- 2004 188 399
- US-A1- 2007 051 706

## Beschreibung

Die Erfindung betrifft ein Verfahren zum Einbringen einer Struktur in eine Oberfläche eines in einem bestimmten Wellenlängenbereich transparenten Werkstücks, bei dem die zu strukturierende Oberfläche mit einer ein Targetmaterial enthaltenden Targetoberfläche in Kontakt gebracht wird und mittels eines Laserstrahls, dessen Wellenlänge in dem bestimmten Wellenlängenbereich liegt, durch das Werkstück hindurch zumindest an einer Position derart Energie in den Grenzbereich der zu strukturierenden Oberfläche des Werkstücks und der Targetoberfläche eingebracht wird, dass sich an der betreffenden Position Targetmaterial in der zu strukturierenden Oberfläche ablagert. Darüber hinaus betrifft die Erfindung eine entsprechende Vorrichtung zur Durchführung dieses Verfahrens.

Durch Einbringen einer geeigneten Struktur in eine Werkstückoberfläche kann das betreffende Werkstück beispielsweise markiert werden. Hierfür stehen inzwischen handelsübliche Laserbeschriftungs- bzw. Laserkennzeichnungssysteme zur Verfügung, mit denen es möglich ist, als Markierung verschiedene Strukturen, beispielsweise eine Beschriftung, eine maschinenlesbare Kodierung wie z. B. einen Barcode oder ein anderes beliebiges graphisches Element in die Oberfläche des betreffenden Werkstücks einzubringen. Dabei können mit solchen Systemen die verschiedensten Materialien, insbesondere auch transparente Materialien wie Glas oder Plexiglas, markiert werden, sofern geeignete Laser verwendet werden. Normalerweise wird dabei zur Markierung von transparenten Materialien ein Laserstrahl verwendet, dessen Licht möglichst gut von dem transparenten Material absorbiert wird. Beispielsweise hat Glas einen Transmissionsbereich für Lichtwellenlängen zwischen ca. 180 nm und ca. 2.500 nm. Daher werden derzeit zur Glasmarkierung u. a. CO₂-Laser mit einer Wellenlänge von 10.600 nm, 9.600 nm oder 9.300 nm verwendet. Die Funktionsweise ist dabei so, dass der Laser an der zu markierenden Stelle in oder auf der Oberfläche des betreffenden Werkstücks fokussiert wird und dadurch an dieser Stelle möglichst viel Energie in das Werkstück eingebracht wird. Dies führt dazu, dass lokal begrenzt an der betreffenden Stelle im Werkstückmaterial sogenannte "Mikrocracks" entstehen, die dann im transparenten Material sichtbar sind. Alternativ kann auch in der Oberfläche eine Gravur eingefügt werden. Dabei wird lokal Material aus der Oberfläche des zu markierenden Werkstücks entfernt.

In der US 5,761,111 wird vorgeschlagen, mittels eines Lasers den Brechungsindex eines Werkstücks im Bereich der Markierung zu ändern. Üblicherweise sind derartige Strukturen oder Markierungen dazu vorgesehen, maschinell wieder ausgelesen zu werden, da sie unter normalen Umständen mit dem bloßen Auge nicht erkannt werden bzw. nur unter bestimmten Beleuchtungsbedingungen sichtbar sind, wie zum Beispiel eine übliche CD.

In der US 2007/0051706 A1 wird eine ähnliche Art der Markierung mit Hilfe eines Lasers in einem tieferen Bereich unter der Oberfläche eines Werkstücks beschrieben. Alternativ wird vorgeschlagen, das Werkstück an der Oberfläche mittels des Lasers zu gravieren.

Um die Sichtbarkeit zu erhöhen, kann eine Gravur beispielsweise mit einem undurchsichtigen Material ausgelegt werden. Die Einbringung dieses Materials in eine Gravur erfordert aber einen zusätzlichen Arbeitsgang. Weitere mögliche Markierungsverfahren sind herkömmliche Druckverfahren, mit denen ein Schriftzug oder ein sonstiges graphisches Element auf die Oberfläche aufgebracht wird. Ein Nachteil dieser Druckverfahren besteht darin, dass die Markierung relativ leicht zerstörbar ist.

In der DE 195 17 625 A1 wird als Alternative ein Verfahren der eingangs genannten Art beschrieben, bei dem zur musterförmigen Bedruckung einer Oberfläche eines festen transparenten Substrats, beispielsweise Glas, eine ein Pigment enthaltende Schicht auf die betreffende Oberfläche aufgebracht wird. Diese Schicht wird dann durch das Substrat hindurch mit einem Laser derart bestrahlt, dass sich das Schichtmaterial auf die Substratoberfläche überträgt. Die so gefertigten Bedruckungen haften sehr stark auf der Oberfläche und sind gegenüber Säuren und Basen beständig, wobei in dieser Schrift angenommen wird, dass beim Bedruckungsvorgang vermutlich auch Partikel des Schichtmaterials in die Oberfläche hineindiffundieren.

US 5,987,920 zeigt ein Verfahren, bei dem ein gepulster Laserstrahl durch ein transparentes Substrat hindurch auf ein daran anliegendes Assistenzmaterial gerichtet wird, wobei vom Assistenzmaterial abgesprengte Partikel eine als Markierung sichtbare Aufrauung der Substratoberfläche und bewirkten.

Außerdem wird in der WO 95/25639 ein ähnliches Verfahren beschrieben, bei dem eine Markierung auf einem transparenten Werkstück erzeugt wird, indem mit einem Laser durch das Werkstück hindurch lokal Energie in ein Target eingebracht wird, so dass das Targetmaterial verdampft und sich lokal auf der zu markierenden Oberfläche des transparenten Werkstücks ablagert. Das Target liegt bei diesem Prozess nicht direkt an der zu markierenden Oberfläche an, sondern wird beispielsweise in einem Abstand von 0,1 mm von der zu markierenden Oberfläche positioniert, um beste Ergebnisse bei dieser Aufdampfungsmethode zu erreichen.

In der DE 196 37 255 C1 wird ein weiteres ähnliches Verfahren beschrieben, bei dem eine zu beschriftende Oberfläche eines transparenten Materials in einem kurzen Abstand von einem Substratmaterial positioniert wird, das aus keramischen Substratteilchen und einem Bindemittel besteht. Durch das transparente Material wird das Substratmaterial lokal mit einem Laser bestrahlt. Dabei wird der Laser auf der zu beschriftenden Oberfläche fokussiert. Die im Substratmaterial eingebrachte Laserenergie sorgt für eine Verdampfung des Bindemittels. Dabei frei werdende Substratteilchen können auf die zu beschriftende Oberfläche in den Fokus des Laserstrahls gelangen und werden dort aufgrund der hohen Energiedichte angesintert.

Da ein Ansintern von Substratteilchen bei späteren Nachbehandlungen des transparenten Materials nachteilig sein könnte, wird in der DE 10 2006 029 941 A1 ein verändertes Verfahren vorgeschlagen. Dabei wird als Substrat ausschließlich ein Metall oder ein Halbmetall wie Silizium eingesetzt. Dieses wird entweder in unmittelbarem Kontakt mit der zu beschriftenden Oberfläche oder vorzugsweise in einem kurzen Abstand zu dieser positioniert. Der wiederum durch das transparente Material hindurch auf das Substrat gerichtete Laserstrahl wird dabei so eingestellt, dass Teilchen des Substrats verdampfen und an der zu beschriftenden Oberfläche kondensieren, wobei keine Diffusion von Partikeln des Substratmaterials in das transparente Material erfolgt. Hierzu wird mit einem gepulsten Laserstrahl mit einer Pulswiederholrate von maximal 1 kHz, einer mittleren Leistung von 8,4 W oder 12 W, einem Fokusdurchmesser von 42 µm und einer Ablenk-Geschwindigkeit von 50 mm/s gearbeitet. Der Laserstrahl wird dabei bevorzugt auf die zu beschriftende Oberfläche des transparenten Materials fokussiert. Bei einer Variante des Verfahrens wird zusätzlich das transparente Material in der zu beschriftenden Oberfläche lokal abgetragen und/oder angeschmolzen. Hierzu wird beispielsweise mit einem Laserstrahl mit einer Pulswiederholrate von maximal 0,4 kHz, einer mittleren Leistung von 12 W, einem Fokusdurchmesser von 42 µm und einer Ablenk-Geschwindigkeit von nur 20 mm/s gearbeitet.

Daneben gibt es noch eine Reihe anderer Verfahren, um Objekte mit Hilfe eines Lasers zu strukturieren. So wird in der WO 03/022506 A1 ein Verfahren zur Erzeugung von Masken beschrieben, die später in einem Lithographieverfahren zur Herstellung von Halbleiter-Wafern verwendet werden sollen. Hierzu ist ein Maskenträger mit einer Beschichtung versehen, in die mit einem Laser eine bestimmte Struktur eingeschrieben wird. Entweder die belichteten oder die unbelichteten Bereiche der Beschichtung werden dann später entfernt.

Es ist eine Aufgabe der vorliegenden Erfindung, ein alternatives Verfahren und eine entsprechende Vorrichtung zum Einbringen einer besonders stabilen Struktur in die Oberfläche eines transparenten Werkstücks anzugeben.

Diese Aufgabe wird durch ein Verfahren gemäß Patentanspruch 1 sowie durch eine Vorrichtung gemäß Patentanspruch 14 gelöst.

Erfindungsgemäß wird also bei einem Verfahren der eingangs genannten Art ein gepulster Laserstrahl mit einer Pulswiederholrate zwischen 20 kHz und 100 kHz verwendet. Dieser wird so fokussiert, dass sich der Fokus auf oder unter der Targetoberfläche befindet, wobei der Laserstrahl im Fokus eine Leistungsdichte von mehr als 2000 W/mm² aufweist. Die Leistungsdichte ist dabei die mittlere Laserleistung im Verhältnis zur Fokusfläche.

Durch die Fokussierung auf die Targetoberfläche oder im Target, beispielsweise knapp unter der Targetoberfläche, wird ein größerer Teil der Energie in das Target eingebracht. Weiterhin wird mit einer erheblich höheren Pulswiederholrate als bei dem genannten Stand der Technik gearbeitet, wobei gleichzeitig eine hohe Leistungsdichte erzeugt wird. Die Pulse sind dabei wegen der hohen Pulswiederholrate entsprechend relativ kurz. Durch die kurzen, aber intensiven Laserpulse gelangen somit die Targetpartikel im Mittel mit einer relativ hohen Energie auf die Oberfläche des transparenten Werkstücks und können somit in diese eindringen. Abweichend von dem oben genannten Stand der Technik wird also hier ganz gezielt versucht, neben dem Aufbringen von Targetmaterial auf die Werkstückoberfläche auch eine möglichst gute Diffusion von Targetmaterial in die Werkstückoberfläche zu erreichen, und das Verfahren gerade nicht so eingestellt, dass sich Targetmaterial möglichst ausschließlich auf der Oberfläche des zu strukturierenden Materials abschlägt.

Bei verschiedenen Experimenten hat sich herausgestellt, dass es mit diesem Verfahren besonders gut möglich ist, Targetmaterial auf und in die Oberfläche des transparenten Werkstücks so einzubringen, dass sich dadurch eine dauerhafte Struktur erzeugen lässt, welche gut sichtbar ist und nur äußerst schwer (z. B. durch ein Abschleifen oder Ausschleifen der Oberfläche) entfernt werden kann.

Eine geeignete Vorrichtung zum Einbringen einer Struktur in eine Werkstückoberfläche nach dem erfindungsgemäßen Verfahren benötigt neben einer ein Targetmaterial enthaltenden Targetoberfläche, welche beispielsweise an die zu strukturierende Oberfläche des Werkstücks angelegt werden kann oder auf welche das Werkstück aufgelegt wird, eine geeignete Laserstrahlerzeugungseinrichtung zum Erzeugen eines Laserstrahls, dessen Wellenlänge in dem Wellenlängenbereich liegt, in dem das Werkstück transparent ist. Die Laserstrahlerzeugungseinrichtung muss so ausgebildet und angeordnet sein, dass durch ein die Targetoberfläche kontaktierendes Werkstück hindurch mittels des Laserstrahls zumindest an einer Position derart Energie in den Grenzbereich der zu strukturierenden Oberfläche des Werkstücks und der Targetoberfläche einbringbar ist, dass sich an der betreffenden Position Targetmaterial in der zu strukturierenden Oberfläche ablagert. Dabei ist die Laserstrahlerzeugungseinrichtung erfindungsgemäß so ausgebildet, dass sie einen gepulsten Laserstrahl mit einer Pulswiederholrate zwischen 20 kHz und 100 kHz erzeugt und eine Fokussiereinrichtung, z. B. ein geeignetes Objektiv, und eine Steuereinrichtung aufweist, welche den Laserstrahl beim Strukturierungsprozess auf oder knapp unter der Targetoberfläche fokussiert, wobei der Laserstrahl im Fokus eine Leistungsdichte von mehr als 2000 W/mm² (mittlere Laserleistung im Verhältnis zur Fokusfläche) aufweist.

Hierbei kann die Steuereinrichtung der Vorrichtung bzw. der Laserstrahlerzeugungseinrichtung dazu ausgelegt sein, nicht nur für die gewünschte Einstellung der Fokussierungsparameter, wie Position und Durchmesser des Fokus, zu sorgen, sondern auch für die Einstellung weiterer Laserparameter wie Pulswiederholrate oder Leistung. Diese Steuereinrichtung kann aus einer zentralen Steuereinheit bestehen oder aus mehreren Steuereinheiten, die in geeigneter Weise zur Kommunikation miteinander verbunden sind.

Weitere besonders vorteilhafte Ausgestaltungen und Weiterbildungen der Erfindung ergeben sich aus den abhängigen Ansprüchen sowie der nachfolgenden Beschreibung. Dabei kann die erfindungsgemäße Vorrichtung auch entsprechend den abhängigen Verfahrensansprüchen weitergebildet sein und umgekehrt.

Das Verfahren kann zur Einbringung einer Struktur in Oberflächen verschiedenster transparenter Materialien wie verschiedene Gläser, Plexiglas etc. eingesetzt werden. Besonders bevorzugt eignet es sich zur Einbringung von Strukturen in Oberflächen von Glaswerkstücken, da dies mit anderen Mitteln nur sehr schwer möglich ist und die mit Hilfe des erfindungsgemäßen Verfahrens geschaffenen Strukturen in Glasmaterialien besonders haltbar sind.

Auch als Targetmaterialien können verschiedenste Materialien eingesetzt werden. In Experimenten hat sich herausgestellt, dass sich Metalle wie Kupfer, Aluminium, insbesondere Titanal (eine spezielle Aluminiumlegierung), Titan etc. sehr gut eignen. Ganz besonders gut eignen sich Stähle, bevorzugt rostfreie Stähle wie z. B. V2A, bei denen auch mit einer geringeren Laserleistung eine sehr gute optische Erkennbarkeit der Struktur erreicht werden kann.

Das Targetmaterial kann besonders bevorzugt auch in Form einer Folie, z. B. als Metallfolie oder metallhaltige bzw. pigmenthaltige Folie, vor dem Strukturierungsprozess auf die Werkstückoberfläche aufgebracht und anschließend wieder entfernt werden. Ganz besonders bevorzugt kann es sich um eine selbsthaftende Folie handeln.

Sofern es sich bei dem Targetmaterial um ein leitfähiges Material handelt, können mit diesem Verfahren auch beliebige leitfähige Strukturen auf eine Glasoberfläche bzw. eine Oberfläche eines sonstigen transparenten Materials aufgebracht werden.

Ein bevorzugter Einsatz der Erfindung ist die eingangs erläuterte Markierung von Werkstücken mit Strukturen in Form von Schriftzeichen, Logos usw. Alternativ oder zusätzlich können die auf die erfindungsgemäße Weise eingebrachten Strukturen aber auch völlig anderen Zwecken dienen. Beispielsweise können aus rein optischen Gründen bzw. Designgründen künstlerische Verzierungen, flächige Strukturen, fotografische Abbildungen etc. in die Oberfläche eingebracht werden.

Ein bevorzugtes weiteres Anwendungsbeispiel ist die Aufbringung von technischen Leiterbahnstrukturen, wie z. B. Antennenstrukturen oder Heizleitern, was insbesondere für Kraftfahrzeugscheiben interessant ist.

Die Wellenlänge des Laserstrahls - d. h. die Wellenlänge des Lichts dieses Laserstrahls - sollte vorzugsweise in einem Bereich von ca. 180 nm bis ca. 2.500 nm, besonders bevorzugt in einem Bereich von ca. 300 nm bis ca. 1.800 nm liegen. Insbesondere bei der Markierung von Glaswerkstücken hat sich der Einsatz eines Lasers mit einer Wellenlänge von ca. 1.060 nm bewährt. Ein Laser mit einer solchen Wellenlänge ist beispielsweise ein sog. FAYb-Laser (Fiber Amplified Ytterbium Laser). Gut einsetzbar sind auch Nd-YAG-Laser (Neodym dotierter Yttrium-Aluminium-Granat-Laser) mit Wellenlängen von 1.064 nm oder 532 nm.

Weiterhin weist die Laserstrahlerzeugungseinrichtung bevorzugt eine Strahlführungseinrichtung auf, um den Laserfokus entlang einer gemäß einem Strukturierungsbild vorgegebenen Strukturierungsspur zu bewegen. Das heißt, der Laser wird punktuell entlang dieser Strukturierungsspur, beispielsweise entlang eines Schriftzugs, mit einer vorgegebenen Vorschubgeschwindigkeit schrittweise oder kontinuierlich verfahren, um so das gewünschte Strukturierungsbild zu erzeugen.

Vorzugsweise erfolgt der Vorschub mit einer Vorschubgeschwindigkeit von mehr als 70 mm/s, besonders bevorzugt von mehr als 100 mm/s, je nach konkreter Anwendung gegebenenfalls sogar noch erheblich höher.

Eine solche Strahlführungseinrichtung kann auf beliebige Weise aufgebaut sein. Beispielsweise kann der Laser über einen Lichtleiter geführt werden und dieser Lichtleiter wird durch geeignete Stelleinrichtungen passend justiert. Die Strahlführungseinrichtung kann aber ebenso in üblicher Weise mit Ablenkeinheiten aufgebaut sein, beispielsweise mit zwei Umlenkspiegeln, Prismen oder dergleichen. Um mit einem solchen System dafür zu sorgen, dass der Fokus des Laserstrahls jeweils in einer Ebene direkt auf oder unter der Targetoberfläche bleibt, muss die Fokussiereinrichtung entsprechend ausgestaltet sein. Hierzu bietet es sich z. B. an, ein Planfeld-Objektiv mit einer F-Theta-Linse oder Ähnliches einzusetzen. Ein solches F-Theta-Objektiv fokussiert den Laserstrahl auf eine plane Bildfeldebene. Dabei besteht eine exakte Proportionalität zwischen dem Einfallswinkel des Strahls und der Position des fokussierten Bildpunkts im Bildfeld, d. h. in der Ebene, in der die Strukturierung erfolgen soll. Ebenso können auch geeignete 3D-Objektive eingesetzt werden, z. B. wenn die zu strukturierende Oberfläche gekrümmt ist. Geeignete Ablenkeinheiten mit integrierten Fokussierobjektiven sind beispielsweise für die Verwendung in üblichen Laserbeschriftungs- bzw. Laserkennzeichnungsvorrichtungen im Handel erwerbbar. Diese können auch für die erfindungsgemäße Vorrichtung verwendet werden. Ebenso können auch die für diese Einrichtungen vorgesehenen Steuerungen verwendet werden. Erforderlich ist jedoch, dass ein geeigneter Laser verwendet wird, welcher eine Wellenlänge aufweist, in der das zu strukturierende Material transmissiv ist, und dass die Steuerung derart eingestellt, ggf. auch für eine automatische Steuerung entsprechend programmiert ist, dass der Fokus sich nicht in dem zu strukturierenden Werkstück selbst, sondern z. B. auf oder knapp unter der Targetoberfläche befindet.

Wie bereits eingangs erläutert, wird erfindungsgemäß der Strukturierungsprozess bewusst so ausgelegt, dass Partikel des Targetmaterials möglichst gut in die zu strukturierende Oberfläche des transparenten Werkstücks hinein diffundieren. Bevorzugt erfolgt daher die Strukturierung so, dass Partikel des Targetmaterials zumindest an einer Stelle mit der größten Eindringtiefe - z. B. bei einer Punktmarkierung im Mittelpunkt der Punktmarkierung oder einer Linienmarkierung entlang einer Mittellinie der Linienmarkierung - mindestens ca. 15 µm, vorzugsweise mindestens ca. 30 µm tief in die zu strukturierende Oberfläche eindringen. In den bisher durchgeführten Testmarkierungen hat sich gezeigt, dass mit dem erfindungsgemäßen Verfahren ohne weiteres eine Eindringtiefe der Targetpartikel in die Werkstückoberfläche von bis zu 30 µm und mehr erreichbar ist.

Vorzugsweise sollte dazu möglichst kurzzeitig eine hohe Energie im Target eingebracht werden. Dabei wird der Laserstrahl bevorzugt so gesteuert, dass die Temperatur in der zu strukturierenden Oberfläche auch während der Strukturierung unterhalb der Schmelztemperatur des Werkstückmaterials liegt, und zwar auch im unmittelbaren Grenzbereich zur Targetoberfläche, in der sich gerade der Laserstrahlfokus befindet. D. h. die Werkstückoberfläche soll nicht lokal angeschmolzen werden. Bei Glas liegt die Schmelztemperatur je nach Glastyp zwischen ca. 1.000 °C und ca. 1.600°C.

Andererseits sollte die Temperatur in der gerade zu markierenden Werkstückoberfläche auch nicht zu gering sein, da eine höhere Temperatur die Diffusion begünstigt. Besonders bevorzugt ist eine Temperatur oberhalb von ca. 600°C.

Die Einstellung der optimalen Bedingungen erfolgt durch die Justage verschiedener Parameter, die zum einen die vom Laserstrahl in das Target eingebrachte Energie und zum anderen die Zeit determinieren, in der diese Energie eingebracht wird.

Es hat sich als vorteilhaft herausgestellt, wenn der Laserstrahl im Fokus eine möglichst hohe Leistungsdichte aufweist. Daher wird der Laserstrahl vorzugsweise so eingestellt, dass er im Fokus eine Leistungsdichte von mehr als ca. 3 kW/mm² aufweist, besonders bevorzugt mehr als ca. 10 kW/mm², ganz besonders bevorzugt sogar mehr als ca. 100 kW/mm².

Hierzu muss zum einen der Fokusdurchmesser ausreichend gering sein. Vorzugsweise wird ein Fokusdurchmesser eingestellt, der kleiner als 60 µm, besonders bevorzugt kleiner als 40 µm, ist. In Tests wurden beispielsweise hervorragende Markierungen mit einem Fokusdurchmesser von nur ca. 30 µm erzielt.

Zum anderen muss die mittlere Leistung des Lasers ausreichend hoch sein. Vorzugsweise sollte diese höher als 10 W sein. Bevorzugt wird ein Laser eingesetzt, dessen mittlere Leistung zwischen 10 W und 50 W einstellbar ist. Bei einem Fokusdurchmesser von ca. 60 µm reicht eine Leistung von 12 W aus, um im Fokus eine Leistungsdichte von mehr als 4 kW/mm² zu erreichen.

Neben der eingebrachten Leistung spielen aber für das Temperaturverhalten im Target - und somit auch in der angrenzenden Werkstückoberfläche - auch die bereits oben definierte Vorschubgeschwindigkeit sowie die Pulswiederholrate des Laserstrahls eine Rolle. Wie gesagt, wird erfindungsgemäß mit einer relativ hohen Pulswiederholrate zwischen 20 kHz und 100 kHz gearbeitet. Dies entspricht einer Pulswiederholzeit zwischen 10 µs und 50 µs.

Entsprechend dieser kurzen Pulswiederholzeit müssen auch die Laserpulse selbst relativ kurz sein. Die Pulsdauer der Laserpulse ist vorzugsweise kürzer als 100 ns, besonders bevorzugt kürzer als 20 ns. Da eine möglichst kurze Pulsdauer vorteilhaft ist, wäre eine Pulsdauer im ps-Bereich oder darunter ganz besonders bevorzugt.

Die kurzen Pulsdauern führen bei einer gegebenen mittleren Leistung zu einer entsprechend hohen Laserpulsspitzenleistung (auch "Laser Peak Power" genannt). Bei dem erfindungsgemäßen Verfahren wird vorzugsweise mit Laserpulsspitzenleistung größer als 10 kW, besonders bevorzugt größer als 25 kW, gearbeitet. Es wird folglich dafür gesorgt, dass möglichst viel Energie in möglichst kurzer Zeit in das Targetmaterial eingebracht wird, um so einerseits die Partikel des Targetmaterials mit ausreichender Energie auszustatten und andererseits die Temperatur im zu markierenden Werkstück auch lokal in den gewünschten Temperaturgrenzen zu halten und so eine möglichst gute Diffusion von Targetpartikeln in die Werkstückoberfläche zu erreichen.

Die Erfindung wird im Folgenden unter Hinweis auf die beigefügten Figuren anhand eines Ausführungsbeispiels noch einmal näher erläutert. Hieraus ergeben sich noch weitere Einzelheiten und Vorteile der Erfindung. Es zeigen:
- Figur 1: eine schematische Darstellung eines Ausführungsbeispiels einer erfindungsgemäßen Vorrichtung bei der Markierung eines Glaswerkstücks,
- Figur 2: einen Schnitt durch das Glaswerkstück mit dem darunter befindlichen Target beim Einbringen der Markierung,
- Figur 3: einen Schliff durch ein mit dem erfindungemäßen Verfahren markiertes Glaswerkstück im Bereich der Markierung, zur Bestimmung der Eindringtiefe der Targetpartikel.

Im Folgenden wird - ohne die Erfindung auf diesen Einsatz zu beschränken - davon ausgegangen, dass das Einbringen der Struktur in die Oberfläche zur Markierung des Werkstücks dient. Wie erwähnt können mit dem erfindungsgemäßen Verfahren genauso auch Strukturen für andere Zwecke wie z. B. technische Leiterbahnstrukturen oder graphische Flächen in die Oberfläche eingebracht werden.

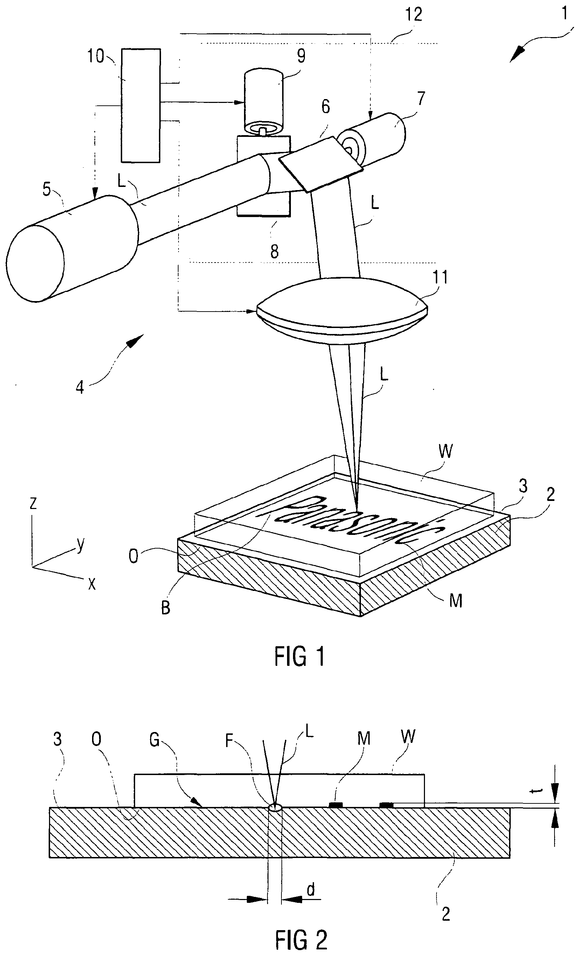

Bei dem in Figur 1 dargestellten Ausführungsbeispiel einer erfindungsgemäßen Vorrichtung handelt es sich im Wesentlichen um eine herkömmliche Laserbeschriftungseinrichtung, welche - wie nachfolgend erläutert wird - für eine Verwendung mit dem erfindungsgemäßen Verfahren entsprechend modifiziert wurde.

Ein wesentlicher Punkt ist hierbei, dass sich unterhalb des zu markierenden Werkstücks W ein Target 2, beispielsweise eine Stahlplatte 2 oder eine Stahlfolie, befindet, auf welche das zu markierende Werkstück W mit der zu markierenden Oberfläche O aufgelegt wird. Die Oberfläche der Stahlplatte 2 oder Stahlfolie, auf der die zu markierende Oberfläche O des Werkstücks möglichst großflächig innerhalb des Bereichs aufliegt, in dem die Markierung M anzubringen ist, bildet die Targetoberfläche 3.

Weiterhin wird eine Laserstrahlerzeugungseinrichtung 4 mit einer Laserstrahlquelle 5 verwendet, welche einen Laserstrahl L mit einer Wellenlänge erzeugt, in dem das zu markierende Werkstück W transmissiv ist. Der Transmissionsbereich von Glas liegt zwischen 180 nm und 2.500 nm. Daher wird vorzugsweise hier ein FAYb-Laser mit einer Wellenlänge von λ = 1.060 nm eingesetzt.

Die Laserstrahlerzeugungseinrichtung 4 weist neben der Laserstrahlquelle 5 eine Strahlführungseinrichtung 12 in Form einer Ablenkeinheit 12 mit zwei über Ansteuermotoren 7, 9 angetriebenen Ablenkspiegeln 6, 8 auf, welche für eine Verkippung des Laserstrahls L in zwei senkrechte Richtungen sorgen. Angekoppelt an diese Strahlführungseinrichtung 12 bzw. Ablenkeinheit 12 ist eine Fokussierungseinrichtung 11, beispielsweise ein Planfeld-Objektiv bzw. F-Theta-Objektiv 11 mit einer F-Theta-Linse. In Figur 1 ist die Fokussierungseinrichtung 11 nur durch die F-Theta-Linse schematisch dargestellt. Die Ablenkeinheit 12 kann gemeinsam mit diesem F-Theta-Objektiv 11 als eine Einheit ausgebildet sein. Sinn des F-Theta-Objektivs 11 ist es, den unter einem bestimmten Winkel von den Ablenkspiegeln 6, 8 abgelenkten Laserstrahl L in eine planparallele, sich in dem in Figur 1 dargestellten Koordinatensystem in der x- und y-Richtung erstreckende Ebene, welche hier bevorzugt genau auf der Targetoberfläche 3 liegt, zu fokussieren. Dabei wird je nach Einstellung der Ablenkspiegel 6, 8 ein anderer Punkt in dieser x-y-Ebene getroffen. Auf diese Weise kann durch Verstellen der Ansteuermotoren 7, 9 bzw. der Ablenkspiegel 6, 8 der Fokus F des Laserstrahls L in beliebiger Weise entlang einer bestimmten, durch das Markierungsbild B, hier beispielsweise den Schriftzug "Panasonic", vorgegebenen Markierungsspur zu bewegen. Hierbei ist es möglich, den Laserstrahl L durch geeignete Blenden oder Ähnliches kurzfristig auszublenden, um beispielsweise bei voneinander unabhängigen Buchstaben eines solchen Schriftzugs von einem Buchstaben zum nächsten zu springen, ohne dass in diesem Bereich eine Markierung erfolgt.

Die komplette Ablenkeinheit 12 mit dem F-Theta-Objektiv 11 kann auch eine handelsübliche Einheit sein, wie sie bei bisherigen Laserbeschriftungssystemen eingesetzt wird. Angesteuert werden die Laserstrahlquelle 5 und die Ablenkeinheit 12 mit dem F-Theta-Objektiv 11 über eine Steuereinheit 10. Auch hierbei kann eine handelsübliche Steuereinheit 10 verwendet werden, welche entsprechend programmiert werden muss, damit der Fokus F, welcher von der Steuereinheit 10 automatisch eingestellt werden kann, wie vorgesehen auf die Targetoberfläche 3 oder knapp unterhalb der Targetoberfläche 3 eingestellt wird.

Es wird so lokal in dem Bereich, in dem sich der Laserstrahl L aktuell befindet, bzw. auch um diesen Bereich herum, Energie in den Grenzbereich G der zu strukturierenden Oberfläche O des Werkstücks W und der Targetoberfläche 3, d. h. sowohl in das Target als auch in die Werkstückoberfläche O, eingebracht, wobei der größte Teil der Energie zunächst im Fokus F auf der Targetoberfläche 3 eingebracht wird. Dadurch wird das Metall so stark erhitzt, dass Metallpartikel sich auf der Glasoberfläche O niederschlagen und auch in diese eindringen. Dies ist schematisch in Figur 2 dargestellt.

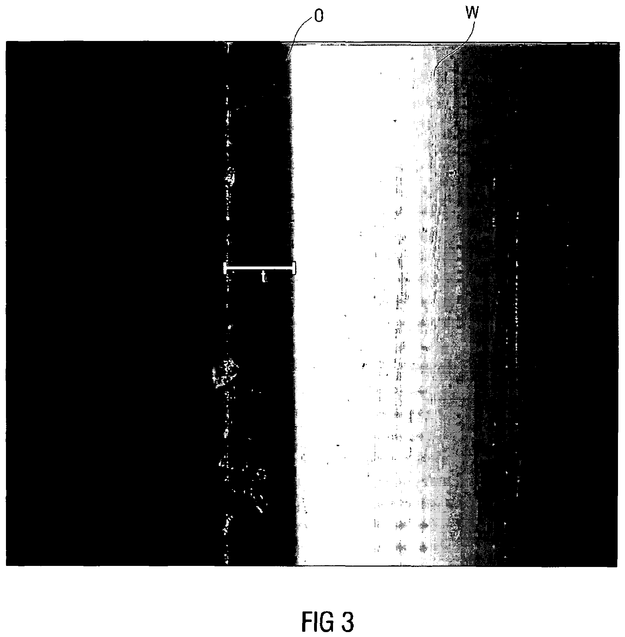

Versuche haben gezeigt, dass an einer Markierung die Eindringtiefe t der Metallpartikel in ein Glassubstrat mehr als 30 µm betragen kann. Figur 3 zeigt ein Schliffbild (500-fache Vergrößerung), aus dem die Diffusionskanäle und die Eindringtiefe erkennbar sind. An einer Stelle wurde die Eindringtiefe t vermessen. Sie beträgt hier ca. 48 µm.

Für diese Versuche wurde ein FAYb-Laser mit einer durchschnittlichen Leistung von 12 Watt verwendet. Hierbei handelt es sich um einen gepulsten Laser mit einer Laserspitzenleistung von bis zu 20 kW bei einem 20 ns langen Puls. Die Pulswiederholzeit kann bei diesem System von 10 µs bis 50 µs eingestellt werden. Der Laser ist ein sogenannter "Single Mode Laser" (Mode TEM00) und hat einen Güteparameter M² = 1,4. Bei den Tests wurde das Objektiv 190 mm von der Targetoberfläche 3 positioniert und der Fokus F direkt auf die Targetoberfläche 3 eingestellt. Der Strahldurchmesser d beträgt im Fokus F dann ca. 60 µm (siehe Figur 2). Der Laser hat bei dieser Einstellung im Fokus eine Leistungsdichte von ca. 4.000 W/mm².

Insbesondere mit verschiedenen Metallen wurden Versuche durchgeführt, die zu besonders gut lesbaren Markierungen geführt haben. So wurden zum einen Versuche mit Kupfer und mit Titanal als Targetmaterial durchgeführt, wobei die Laserleistung jeweils 10 Watt, die Vorschubgeschwindigkeit jeweils 70 mm/s und die Pulswiederholzeit jeweils 50 µs betrug. Die Markierung M war bei diesen Bedingungen bei beiden Targetmaterialien gut lesbar. Bei einem weiteren Versuch wurde als Targetmaterial Aluminium verwendet. Bei einer Laserleistung von 10 Watt und einer Vorschubgeschwindigkeit von 80 mm/s sowie einer Pulswiederholzeit von 50 µs wurde auch hier eine recht gut lesbare Markierung erzeugt.

Dabei hat sich herausgestellt, dass grundsätzlich auch Metallfolien, beispielsweise Alufolie, als Targetmaterialien geeignet sind. So wurden gut lesbare Markierungen bei einer Verwendung von Alufolie mit einer Laserleistung von 5 Watt, einer Vorschubgeschwindigkeit von 1.000 mm/s und einer Pulswiederholzeit von 50 µs erzielt. Die Verwendung von Metallfolie ist unter bestimmten Produktionsbedingungen vorteilhaft, wenn eine spezielle Positionierung des zu markierenden Werkstücks auf einer Targetoberfläche zu aufwändig ist und sich innerhalb des Produktionsgangs eine Metallfolie relativ einfach auf das Werkstück aufbringen lässt.

Die besten Ergebnisse wurden mit Stahl erreicht. Dabei wurden mit einer Leistung von nur 8 Watt und einer Vorschubgeschwindigkeit von 150 mm/s bei einer Pulswiederholzeit von 50 µs besonders gut lesbare Markierungen erzeugt.

Die so markierten Werkstücke wurden dann hinsichtlich einer Zerstörbarkeit der Markierungen getestet. Dabei hat sich herausgestellt, dass sich die Markierungen weder durch Reinigungs- bzw. Scheuermittel noch durch Abkratzen mit einer Klinge oder Ähnlichem erheblich beschädigen ließen.

Mit dem erfindungsgemäßen Verfahren lassen sich also auf einfache Weise sehr gut haltbare Strukturen für beliebige Funktionen insbesondere in Glasoberflächen erzeugen, wobei vorteilhafterweise relativ einfach modifizierte herkömmliche Laserbeschriftungssysteme nutzbar sind.

Es wird abschließend noch einmal darauf hingewiesen, dass es sich bei den in den Figuren dargestellten Vorrichtungen sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Verfahren zum Einbringen einer Struktur (M) in eine Oberfläche (O) eines in einem bestimmten Wellenlängenbereich transparenten Werkstücks (W), bei dem die zu strukturierende Oberfläche (O) mit einer ein Targetmaterial enthaltenden Targetoberfläche (3) in Kontakt gebracht wird und mittels eines Laserstrahls (2), dessen Wellenlänge in dem bestimmten Wellenlängenbereich liegt, durch das Werkstück (W) hindurch zumindest an einer Position derart Energie in den Grenzbereich (G) der zu strukturierenden Oberfläche (O) des Werkstücks (W) und der Targetoberfläche (3) eingebracht wird, dass sich an der betreffenden Position Targetmaterial in der zu strukturierenden Oberfläche (O) ablagert,
**dadurch gekennzeichnet, dass**
ein gepulster Laserstrahl (L) mit einer Pulswiederholrate zwischen 20 kHz und 100 kHz verwendet wird, der so fokussiert wird, dass sich der Fokus auf oder unter der Targetoberfläche befindet, wobei der Laserstrahl im Fokus eine Leistungsdichte (mittlere Laserleistung im Verhältnis zur Fokusfläche) von mehr als 2000 W/mm² aufweist.

2. Verfahren nach Anspruch 1, **dadurch gekennzeichnet, dass** das Werkstück (W) aus Glas besteht.

3. Verfahren nach Anspruch 1 oder 2, **dadurch gekennzeichnet, dass** das Targetmaterial ein Metall ist.

4. Verfahren nach Anspruch 3, **dadurch gekennzeichnet, dass** das Targetmaterial ein Stahl ist.

5. Verfahren nach einem der vorhergehenden Ansprüche, **dadurch gekennzeichnet, dass** die Struktur (M) zur Markierung des Werkstücks (W) ausgebildet ist.

6. Verfahren nach einem der vorhergehenden Ansprüche, **dadurch gekennzeichnet, dass** der Fokus (F) des Laserstrahls (L) entlang einer gemäß einem Strukturierungsbild (B) vorgegebenen Strukturierungsspur mit einer Vorschubgeschwindigkeit von mehr als 70 mm/s, besonders bevorzugt von mehr als 100 mm/s. bewegt wird.

7. Verfahren nach einem der vorhergehenden Ansprüche, **dadurch gekennzeichnet, dass** die Strukturierung so erfolgt, dass Partikel des Targetmaterials zumindest an einer Stelle mindestens ca. 15 µm, vorzugsweise mindestens ca. 30 µm tief in die zu strukturierende Oberfläche eindringen.

8. Verfahren nach einem der vorhergehenden Ansprüche, **dadurch gekennzeichnet, dass** der Laserstrahl so gesteuert wird, dass die Temperatur in der zu strukturierende Oberfläche bei der Strukturierung unterhalb der Schmelztemperatur des Werkstückmaterials liegt.

9. Verfahren nach einem der vorhergehenden Ansprüche, **dadurch gekennzeichnet, dass** der Laserstrahl im Fokus eine Leistungsdichte von mehr als ca. 3 kW/mm², vorzugsweise mehr als ca. 10 kW/mm², besonders bevorzugt mehr als ca. 100 kW/mm², aufweist.

10. Verfahren nach einem der vorhergehenden Ansprüche, **dadurch gekennzeichnet, dass** der Fokusdurchmesser kleiner als 60 µm, vorzugsweise kleiner als 40 µm, ist.

11. Verfahren nach einem der vorhergehenden Ansprüche, **dadurch gekennzeichnet, dass** die Pulsdauer der Laserpulse kürzer als 100 ns, vorzugsweise kürzer als 20 ns, ist.

12. Verfahren nach einem der vorhergehenden Ansprüche, **dadurch gekennzeichnet, dass** die Laserpulsspitzenleistung größer als 10 kW, vorzugsweise größer als 25 kW, ist.

13. Vorrichtung (1) zum Einbringen einer Struktur (M) in eine Oberfläche (O) eines in einem bestimmten Wellenlängenbereich transparenten Werkstücks (W), umfassend
- eine ein Targetmaterial enthaltende Targetoberfläche (3) zur Kontaktierung der zu strukturierenden Oberfläche (O) des Werkstücks (W),
- eine Laserstrahlerzeugungseinrichtung (4) zur Erzeugung eines Laserstrahls (L), dessen Wellenlänge in dem bestimmten Wellenlängenbereich liegt, wobei die Laserstrahlerzeugungseinrichtung (4) so ausgebildet und angeordnet ist, dass durch ein die Targetoberfläche (3) kontaktierendes Werkstück (W) hindurch mittels des Laserstrahls (L) zumindest an einer Position derart Energie in den Grenzbereich (G) der zu strukturierenden Oberfläche (O) des Werkstücks (W) und der Targetoberfläche (3) einbringbar ist, dass sich an der betreffenden Position Targetmaterial in der zu strukturierenden Oberfläche (O) ablagert,
**dadurch gekennzeichnet, dass** die Laserstrahlerzeugungseinrichtung (4) so ausgebildet ist, dass sie einen gepulsten Laserstrahl (L) mit einer Pulswiederholrate zwischen 20 kHz und 100 kHz erzeugt, und eine Fokussiereinrichtung (11) und eine Steuereinrichtung (10) aufweist, welche den Laserstrahl (L) beim Strukturierungsprozess auf oder knapp unter der Targetoberfläche (3) fokussiert, wobei der Laserstrahl im Fokus eine Leistungsdichte (mittlere Laserleistung im Verhältnis zur Fokusfläche) von mehr als 2000 W/mm² aufweist.

14. Vorrichtung nach Anspruch 13, **dadurch gekennzeichnet, dass** die Laserstrahlerzeugungseinrichtung (4) eine Strahlführungseinrichtung (12) aufweist, um den Laserfokus (F) entlang einer gemäß einem Strukturierungsbild (B) vorgegebenen Strukturierungsspur zu bewegen.

## Claims

1. A method for incorporating a structure (M) into a surface (O) of a workpiece (W) which is transparent at a specific wavelength range, in which the surface (O) to be structured is brought in contact with a target surface (3) containing a target material and by means of a laser beam (2), the wavelength of which lies in the specific wavelength range, energy is introduced through the workpiece (W) at least at one position into the boundary region (G) of the surface (O), to be structured, of the workpiece (W) and of the target surface (3) such that at the relevant position target material is deposited in the surface (O) to be structured,
**characterized in that**
a pulsed laser beam (L) with a pulse repetition rate between 20 kHz and 100 kHz is used, which is focussed so that the focus is situated on or under the target surface, wherein the laser beam in the focus has a power density (mean laser power in relation to the focus area) of more than 2000 W/mm².

2. The method according to Claim 1, **characterized in that** the workpiece (W) is made of glass.

3. The method according to Claim 1 or 2, **characterized in that** the target material is a metal.

4. The method according to Claim 3, **characterized in that** the target material is a steel.

5. The method according to one of the preceding claims, **characterized in that** the structure (M) is designed for marking the workpiece (W).

6. The method according to one of the preceding claims, **characterized in that** the focus (F) of the laser beam (L) is moved along a structuring track, specified according to a structuring image (B), at an advancing rate of more than 70 mm/s, particularly preferably of more than 100 mm/s.

7. The method according to one of the preceding claims, **characterized in that** the structuring is carried out such that particles of the target material penetrate the surface to be structured at least at one point to a depth of at least about 15 µm, preferably at least about 30 µm.

8. The method according to one of the preceding claims, **characterized in that** the laser beam is controlled such that the temperature in the surface to be structured during the structuring lies below the melting temperature of the workpiece material.

9. The method according to one of the preceding claims, **characterized in that** the laser beam in the focus has a power density of more than about 3 kW/mm², preferably more than about 10 kW/mm², particularly preferably more than about 100 kW/mm².

10. The method according to one of the preceding claims, **characterized in that** the focus diameter is less than 60 µm, preferably less than 40 µm.

11. The method according to one of the preceding claims, **characterized in that** the pulse duration of the laser pulses is less than 100 ns, preferably less than 20 ns.

12. The method according to one of the preceding claims, **characterized in that** the laser pulse peak power is more than 10 kW, preferably more than 25 kW.

13. An apparatus (1) for incorporating a structure (M) into a surfce (O) of a workpiece (W) which is transparent in a specific wavelength range, comprising
- a target surface (3), containing a target material, for contacting the surface (O), to be structured, of the workpiece (W),
- a laser beam generation device (4) for generating a laser beam (L), the wavelength of which lies in the specific wavelength range, wherein the laser beam generation device (4) is designed and arranged such that energy can be introduced into the boundary region (G) of the surface (O), to be structured, of the workpiece (W) and of the target surface (3), at least at one position, by means of the laser beam (L) through a workpiece (W) contacting the target surface (3), such that at the relevant position target material is deposited in the surface (O) to be structured,
**characterized in that** the laser beam generation device (4) is designed such that it generates a pulsed laser beam (L) with a pulse repetition rate between 20 kHz and 100 kHz, and has a focussing device (11) and a control device (10) which focusses the laser beam (L) during the structuring process onto or just under the target surface (3), wherein the laser beam in the focus has a power density (mean laser power in relation to the focus area) of more than 2000 W/mm².

14. The device according to Claim 13, **characterized in that** the laser beam generation device (4) has a beam guidance device (12) in order to move the laser focus (F) along a structuring track defined according to a structuring image (B).

## Revendications

1. Procédé destiné à empreindre une structure (M) dans une surface (O) d'une pièce d'oeuvre (W) transparente dans une certaine gamme de longueurs d'onde, lors duquel on met en contact la surface (O) à structurer avec une surface cible (3) contenant une matière cible et à l'aide d'un rayon laser (2), dont la longueur d'onde se situe dans la certaine gamme de longueurs d'onde, on introduit de l'énergie à travers la pièce d'oeuvre (W), au moins sur une position dans la zone limite (G) de la surface (O) à structurer de la pièce d'oeuvre (W) et de la surface cible (3) de telle sorte que sur la position concernée, de la matière cible se dépose dans la surface (O) à structurer,
**caractérisé en ce**
**qu'**on utilise un rayon laser (L) pulsé, à un taux de répétition d'impulsions compris entre 20 kHz et 100 kHz , que l'on focalise de telle sorte que le foyer se trouve sur ou sous la surface cible, le rayon laser présentant dans le foyer une densité de puissance (puissance moyenne du laser par rapport à la surface focale) de plus de 2000 W/mm².

2. Procédé selon la revendication 1, **caractérisé en ce que** la pièce d'oeuvre (W) est en verre.

3. Procédé selon la revendication 1 ou la revendication 2, **caractérisé en ce que** la matière cible est un métal.

4. Procédé selon la revendication 3, **caractérisé en ce que** la matière cible est un acier.

5. Procédé selon l'une quelconque des revendications précédentes, **caractérisé en ce que** la structure (M) est conçue pour le marquage de la pièce d'oeuvre (W).

6. Procédé selon l'une quelconque des revendications précédentes, **caractérisé en ce qu'**on déplace le foyer (F) du rayon laser (L) le long d'une piste de structuration prédéfinie selon un motif de structuration (B), à une vitesse d'avance supérieure à 70 mm/seconde, de manière particulièrement préférée, supérieure à 100 mm/seconde.

7. Procédé selon l'une quelconque des revendications précédentes, **caractérisé en ce que** la structuration s'effectue de telle sorte qu'au moins en un endroit, des particules de la matière cible pénètrent à une profondeur d'au moins environ 15 µm, de préférence d'au moins environ 30 µm dans la surface à structurer.

8. Procédé selon l'une quelconque des revendications précédentes, **caractérisé en ce qu'**on commande le rayon laser de telle sorte que, lors de la structuration, la température dans la surface à structurer soit inférieure à la température de fusion de la matière de la pièce d'oeuvre.

9. Procédé selon l'une quelconque des revendications précédentes, **caractérisé en ce que** dans le foyer, le rayon laser présente une densité de puissance supérieure à environ 3 kW/mm², de préférence supérieure à environ 10 kW/mm², de manière particulièrement préférée, supérieure à env. 100 kW/mm².

10. Procédé selon l'une quelconque des revendications précédentes, **caractérisé en ce que** le diamètre focal est inférieur à 60 µm, de préférence inférieur à 40 µm.

11. Procédé selon l'une quelconque des revendications précédentes, **caractérisé en ce que** la durée d'impulsion des impulsions laser est inférieure à 100 ns, de préférence inférieure à 20 ns.

12. Procédé selon l'une quelconque des revendications précédentes, **caractérisé en ce que** la puissance de crête des impulsions laser est supérieure à 10 kW, de préférence supérieure à 25 kW.

13. Dispositif (1) destiné à empreindre une structure (M) dans une surface (O) d'une pièce d'oeuvre (W) transparente dans une certaine gamme de longueurs d'onde, comprenant
- une surface cible (3) contenant une matière cible pour la mise en contact avec la surface (O) à structurer de la pièce d'oeuvre (W),
- un système de génération d'un rayon laser (4) pour la génération d'un rayon laser (L), dont la longueur d'onde se situe dans la certaine gamme de longueurs d'onde, le système de génération du rayon laser (4) étant conçu et placé de telle sorte, qu'à travers une pièce d'oeuvre (W) contactant la surface cible (3), à l'aide du rayon laser (L) au moins sur une position, de l'énergie soit susceptible d'être introduite dans la zone limite (G) de la surface (O) à structurer de la pièce d'oeuvre (W) et de la surface cible (3) de sorte que sur la position concernée, de matière cible se dépose dans la surface (O) à structurer,
**caractérisé en ce que** le système de génération d'un rayon laser (4) est conçu de sorte à générer un rayon laser (L) pulsé avec un taux de répétition d'impulsion compris entre 20 kHz et 100 kHz et comporte un système de focalisation (11) et un système de commande (10) lequel, lors du processus de structuration focalise le rayon laser (L) sur ou juste en dessous de la surface cible (3), le rayon laser présentant dans le foyer une densité de puissance (puissance moyenne du laser par rapport à la surface focale) de plus de 2000 W/mm².

14. Dispositif selon la revendication 13, **caractérisé en ce que** le système de génération d'un rayon laser (4) comporte un système de guidage des rayons (12) pour déplacer le foyer du laser (F) le long d'une piste de structuration prédéfinie par un motif de structuration (B).
